# FASCICULE DE BREVET EUROPEEN

(11) **EP 3 371 735 B1**
(45) Date de publication et mention de la délivrance du brevet: **01.01.2020**
(21) Numéro de dépôt: 16790618.9
(22) Date de dépôt: 03.11.2016
(51) Int. Cl.: G06K 7/00

(54) **CORPS DE LECTEUR DE CARTE À MÉMOIRE À TREILLIS DE PROTECTION RECTO-VERSO**
KÖRPER EINES SPEICHERKARTENLESERS MIT EINEM SCHUTZNETZ AUF BEIDEN SEITEN
MEMORY CARD READER BODY WITH A PROTECTIVE MESH ON BOTH SIDES

(30) Priorité: 03.11.2015 FR 1560535
(43) Date de publication de la demande: 12.09.2018
(73) Titulaire: Ingenico Group, 75015 Paris (FR)
(72) Inventeur: PAVAGEAU, Stéphane, 26600 La Roche de Glun (FR); DELORME, Jean-Jacques, 26320 Saint-Marcel-les-Valence (FR); JADEAU, Johann, 26000 Valence (FR)
(74) Mandataire: Vidon Brevets & Stratégie
(86) Numéro de dépôt international: PCT/EP2016/076612
(87) Numéro de publication internationale: WO 2017/077006

(56) Documents cités:
- DE-A1- 4 312 905
- FR-A1- 2 997 530
- FR-A1- 3 012 720
- GB-A- 2 411 756

## Description

### 1. DOMAINE DE L'INVENTION

L'invention s'inscrit dans le domaine des dispositifs de lecture de carte à mémoire comprenant un circuit intégré. Ces cartes à mémoire (CAM) sont également appelées carte à puce. De tels dispositifs sont notamment employés dans de nombreux appareils tels que des terminaux de paiement, des dispositifs d'authentification ou d'identification ou encore des dispositifs de lecture de contenus.

Plus précisément, l'invention concerne la sécurisation d'un corps de lecteur de carte à mémoire, comprenant un connecteur de carte à mémoire destiné à être monté dans un terminal de lecture de carte à mémoire.

### 2. ARRIÈRE-PLAN TECHNOLOGIQUE

On s'attache plus particulièrement dans la suite de ce document à décrire la problématique existant dans le domaine des terminaux de paiement électroniques, à laquelle ont été confrontés les inventeurs de la présente demande de brevet. L'invention ne se limite bien sûr pas à ce domaine particulier d'application, mais présente un intérêt pour tout type de terminal pouvant comprendre un lecteur de carte à mémoire et devant faire face à une problématique proche ou similaire.

Les terminaux de lecture de carte à mémoire comprennent, outre un lecteur de cartes à mémoire, un certain nombre de composants tels qu'un clavier, un écran, un ou plusieurs processeurs, une mémoire, une source d'alimentation électrique.

Depuis plusieurs années, les terminaux de lecture de cartes à mémoire ont vu leurs fonctions multipliées. Ceci est particulièrement vrai pour les terminaux de paiement. Ainsi, outre la fonction de paiement, les terminaux embarquent des fonctions de communication en réseau, des fonctions de détection de cartes sans contact (de l'anglais *« contactless »*), des fonctions de gestion de coupons (par exemple des coupons de fidélité), etc.

En plus de la multiplication de telles fonctions auxiliaires, les terminaux de lecture de cartes à mémoire doivent être résistants aux diverses attaques ou tentatives de fraudes dont ils sont fréquemment l'objet.

Parmi les points de sécurisation des terminaux, les industriels du secteur veillent plus particulièrement à la protection du lecteur de cartes à mémoire. Le lecteur de carte à mémoire, en effet, reste un maillon relativement faible du terminal de lecture de carte à mémoire, du fait notamment que le lecteur de carte comprend une fente d'insertion de la carte à mémoire, cette fente rendant l'intérieur du terminal accessible depuis l'extérieur. Plus particulièrement, des attaquants cherchent à se procurer un accès au connecteur de carte à mémoire. Le connecteur de carte à mémoire est la partie du lecteur de carte à mémoire qui entre en contact avec la puce ou le microprocesseur embarqué sur la carte à mémoire.

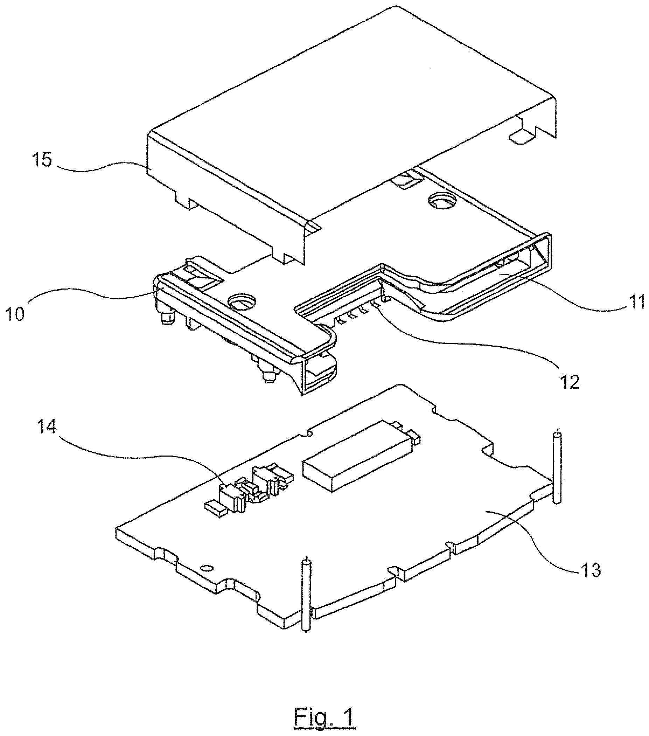

On décrit, en relation avec la **figure 1****,** un assemblage classique d'un lecteur de carte à mémoire. Ce lecteur de carte à mémoire comprend un corps de lecteur de carte à mémoire 10 muni d'une fente d'insertion 11 d'une carte à mémoire. Le connecteur de carte à mémoire est directement intégré au sein du lecteur de carte à mémoire. Il comprend des broches de connexion 12 au circuit imprimé (PCB pour « *Printed Circuit Board* » en anglais) 13. Le PCB 13 comprend également des composants électroniques 14. L'assemblage peut comprendre également un capot de protection 15 destiné à être monté sur le corps de lecteur, lui-même destiné à être monté sur le PCB via des pattes de fixation.

Lorsqu'une personne malveillante parvient à avoir accès au connecteur de carte à mémoire, il est alors envisageable d'intercepter et de lire les données qui sont échangées entre la puce ou le microprocesseur de la carte à mémoire et le processeur du terminal de lecture de carte à mémoire. Parmi les données interceptées, on peut notamment citer le code secret saisi par le client lors de la demande de code secret, qui peut être véhiculé sans cryptage, sur certaines cartes à puce. Ces intrusions peuvent prendre la forme de perçage, de grattage ou tout autre technique intrusive, visant à court-circuiter, couper, et/ou modifier les caractéristiques de signaux électriques sensibles, sans pour autant bloquer le terminal (rendant ainsi toute manipulation ultérieure frauduleuse impossible).

De nombreux efforts ont donc été portés à la sécurisation des lecteurs de carte à mémoire. Ainsi, comme décrit dans les documents de brevet FR2997530 et FR3012720 par exemple, les lecteurs de carte à mémoire sont pourvus d'une protection par treillis électrique avec déclenchement sur niveaux électriques. Il s'agit de fines pistes électriques adjacentes couvrant au moins partiellement la partie à protéger. Par exemple une piste peut être reliée à un plot de connexion d'un signal actif et l'autre à un plot de connexion relié à la masse. Lorsqu'un objet tente de pénétrer dans l'enceinte de protection, une coupure ou un court-circuit est produit entraînant alors une mise hors service du terminal. Les détections d'intrusions peuvent être réalisées sur des niveaux de tensions ou en fonction de la conformité de signaux transitant sur ces pistes.

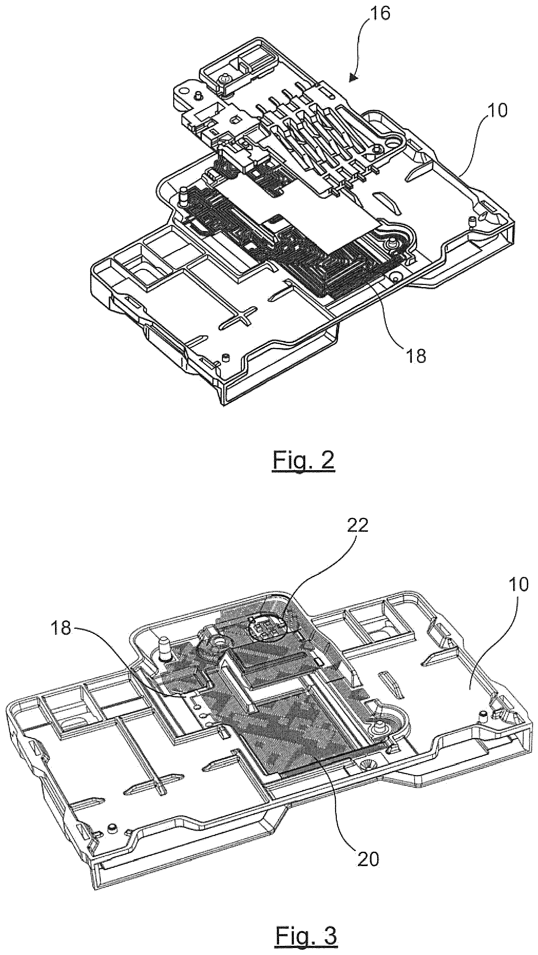

Comme illustré sur les **figures 2 et 3****,** le corps de lecteur de carte à mémoire 10 est muni d'un logement d'accueil 18 du connecteur de carte à mémoire 16. Le logement d'accueil 18 comprend des pistes électriquement conductrices 20. Il s'agit d'une pièce moulée par injection thermoplastique dans laquelle les pistes de circuit électronique 20 sont intégrées en trois dimensions lors de l'injection. Un tel logement d'accueil18 est appelé par la suite logement d'accueil MID ou pièce MID (de l'anglais « *Molded Interconnect Device »*). Les pistes conductrices tridimensionnelles du logement d'accueil MID jouent le rôle de treillis de protection du connecteur de carte à mémoire, en particulier du signal d'entrée sortie I/O CAM (de l'anglais « Input/Output ») transitant entre la carte à mémoire (carte à puce) et le connecteur de carte à mémoire. Les pistes conductrices se présentent sous forme de boucles dont chaque extrémité se termine par un plot de connexion (ou plot de contact). Les différents plots de connexion illustrés ici sont regroupés dans une zone de contact 22.

Pour intégrer les pistes conductrices au sein de la pièce, une technique de gravure au laser est par exemple utilisée. Parmi les techniques de gravure au laser connues, la technique consistant à utiliser un matériau thermoplastique dopé avec un additif métal-plastique activé au moyen d'un laser est utilisée (technique connue sous le nom de LDS pour « *Laser Direct Structuring* »).

Malgré les mesures de protection développées à ce jour, des intrusions au niveau du corps de lecture de carte à mémoire sont néanmoins toujours constatées. Ces mesures de protection ne semblent pas suffisamment dissuasives. Notamment le système de pistes conductrices formant treillis de protection n'offre qu'une solution avec niveau de protection limité.

Il existe un besoin de fournir une solution qui permettrait de renforcer davantage le niveau de sécurité des lecteurs de carte à mémoire, notamment en augmentant le temps nécessaire à l'accès des signaux électriques sensibles du lecteur de carte à mémoire.

### 3. EXPOSÉ DE L'INVENTION

Dans un mode de réalisation particulier de l'invention, il est proposé un corps de lecteur de carte à mémoire comprenant, sur une face interne, un logement d'accueil d'un connecteur de carte à mémoire, le logement d'accueil comprenant au moins une piste électriquement conductrice formant un treillis de protection du connecteur de carte à mémoire, ladite au moins une piste électriquement conductrice s'étendant en outre sur une face externe du corps de lecteur de carte à mémoire au moyen d'au moins une via traversant lesdites faces interne et externe.

On entend par via un trou électriquement conducteur qui assure la liaison électrique de la ou des pistes conductrices entre la face interne et la face externe du corps de lecteur de carte à mémoire.

Ainsi, en étendant la ou les pistes conductrices sur la face externe du corps de lecteur de carte à puce, le treillis de protection selon l'invention présente une surface de protection augmentée par rapport aux solutions de l'art antérieur, réduisant les possibilités d'intrusions de tiers malintentionnés (usinage de la face externe notamment). En effet, plus grande est la surface de piste conductrice et plus grandes sont les chances de détection d'intrusions frauduleuses. Par conséquent, l'accès aux signaux sensibles du lecteur de carte à mémoire sans déclencher un blocage du lecteur est rendu encore plus difficile.

Le principe général de l'invention repose donc sur la mise en œuvre d'un treillis électrique de protection configuré recto-verso, permettant d'améliorer le niveau de sécurité contre toute intrusion de tiers malintentionnés.

Selon un aspect particulier de l'invention, le corps de lecteur de carte à mémoire comprend au moins une piste électriquement conductrice de premier type (par exemple pour conduire un signal actif) dont chaque extrémité est terminée par un plot de connexion situé sur la face interne, ladite piste électriquement conductrice de premier type s'étendant depuis la face interne vers la face externe via un premier trou traversant électriquement conducteur et depuis la face externe vers la face interne via un deuxième trou traversant électriquement conducteur.

Selon un aspect particulier de l'invention, le corps de lecteur de carte à mémoire comprend en outre au moins une piste électriquement conductrice de deuxième type (par la masse) dont chaque extrémité est terminée par un plot de connexion situé sur la face interne, ladite au moins une piste électriquement conductrice de deuxième type s'étendant depuis la face interne vers la face externe via un troisième trou traversant électriquement conducteur et depuis la face externe vers la face interne via un quatrième trou traversant électriquement conducteur.

Selon une caractéristique particulièrement avantageuse en matière de sécurité, la face externe est recouverte d'une résine thermodurcissable.

Ainsi, l'accès par la face externe aux signaux sensibles sans casser les pistes conductrices est rendu très difficile. En effet, une résine thermodurcissable (ou thermodure) étant à la fois dure et fragile, elle permet de rendre cassantes les pistes conductrices lors d'une intrusion par soudure par exemple. Il est donc difficile d'avoir accès aux pistes sans les casser. Comme résine thermodurcissable, on peut envisager une résine de type époxy ou polyuréthane.

Selon une variante de mise en œuvre, la face externe est recouverte d'une résine thermoplastique.

Une telle résine permet également de renforcer le niveau de sécurité.

Selon une caractéristique particulière, le corps de lecteur de carte à mémoire comprend en outre un capot de protection monté sur la face externe.

Un perçage du capot pourrait entraîner une détérioration des pistes conductrices et donc une mise hors service du terminal. Le niveau de sécurité s'en trouve donc renforcé.

Selon une caractéristique particulièrement avantageuse, ledit capot de protection est scellé à la face externe au moyen d'une colle thermodurcissable ou colle cyanoacrylate.

Ainsi, l'accès aux signaux sensibles sans casser les pistes conductrices est rendu encore plus délicate. En effet, le fait de tenter de retirer le capot ou de détériorer celui-ci devrait entrainer la détérioration de la colle thermodurcissable ou cyanoacrylate, ainsi que les pistes conductrices qui se trouvent en dessous. Cette caractéristique renforce donc le niveau de sécurité contre toute intrusion malintentionnée. A noter que le capot peut être de type thermodure, thermoplastique ou métallique. Dans le cas d'un capot métallique, il convient de prévoir une épaisseur de colle ou de résine suffisamment importante pour éviter toute interférence avec les pistes conductrices.

Selon une caractéristique particulière, ladite face interne et/ou ladite face externe présente au moins une zone en relief sur laquelle ladite au moins une piste électriquement conductrice s'étend.

On obtient ainsi des pistes à structure tridimensionnelle permettant de réduire la possibilité d'usiner la face externe du corps de lecteur. L'accès aux signaux sensibles est délicat car il est nécessaire de s'approcher très lentement des pistes conductrices. On augmente encore davantage la durée d'intrusion.

Selon une caractéristique particulièrement avantageuse, dans lequel ladite au moins une piste électriquement conductrice se présente sous la forme d'une boucle ayant une forme géométrique prédéterminée.

Dans un autre mode de réalisation de l'invention, il est proposé un lecteur de carte à mémoire comprenant le corps de lecteur de carte à mémoire précité (dans l'un quelconque de ses différents modes de réalisation).

Dans un autre mode de réalisation de l'invention, il est proposé un terminal comprenant le corps de lecteur de carte à mémoire précité (dans l'un quelconque de ses différents modes de réalisation).

Dans un autre mode de réalisation de l'invention, il est proposé un procédé de fabrication d'un treillis de protection d'un connecteur de carte à mémoire pour un corps de lecteur de carte à mémoire, comprenant :
- définition d'une forme géométrique d'au moins une piste électriquement conductrice s'étendant sur les faces interne et externe dudit corps de lecteur de carte à mémoire au moyen d'au moins une via traversant lesdites faces interne et externe ;
- définition d'un emplacement de ladite au moins une via traversante ;
- obtention de ladite au moins une piste conductrice et de ladite au moins une via traversante sur le corps de lecteur de carte à mémoire.

Le treillis de protection ainsi formé comprend des pistes conductrices recto-verso. La surface de protection se trouve augmentée par rapport aux solutions de l'art antérieur, réduisant les possibilités d'intrusions externes. L'étape d'obtention de ladite au moins une piste conductrice peut être réalisée au moyen d'une technique de gravure au laser, par exemple une technique LSD. L'étape d'obtention d'au moins une via traversante peut être réalisée par perçage mécanique ou grâce à un moulage du corps de lecteur prévoyant la

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1, déjà décrite en relation avec l'art antérieur, présente un exemple d'architecture classique d'un lecteur de carte à mémoire avant assemblage ;
- les figures 2 et 3, déjà décrites en relation avec l'art antérieur, présentent un exemple d'architecture classique d'un corps de lecteur de carte à mémoire muni d'un connecteur de carte à mémoire ;
- les figures 4A et 4B présentent une vue de dessus et une vue de dessous d'un corps de lecteur de carte à mémoire selon un mode de réalisation particulier de l'invention ;
- les figures 5A, 5B, 5C, 5D illustrent chacun un exemple simplifié de schémas électriques d'un treillis de protection selon l'invention, comprenant quatre vias traversantes ;
- la figure 6 illustre un autre exemple simplifié de schéma électrique d'un treillis de protection selon l'invention, comprenant six vias traversantes.
- la figure 7 illustre le corps de lecteur de carte à mémoire des figures 4A et 4B muni d'un capot de protection selon un mode de réalisation particulier de l'invention.

### 5. DESCRIPTION DÉTAILLÉE

Sur toutes les figures du présent document, les éléments et étapes identiques sont désignés par une même référence numérique.

On s'attache plus particulièrement dans la suite à décrire l'invention dans le cadre des terminaux de paiement électronique. L'invention ne se limite bien sûr pas à ce domaine particulier d'application, mais présente un intérêt pour tout type de terminal pouvant comprendre un lecteur de carte à mémoire.

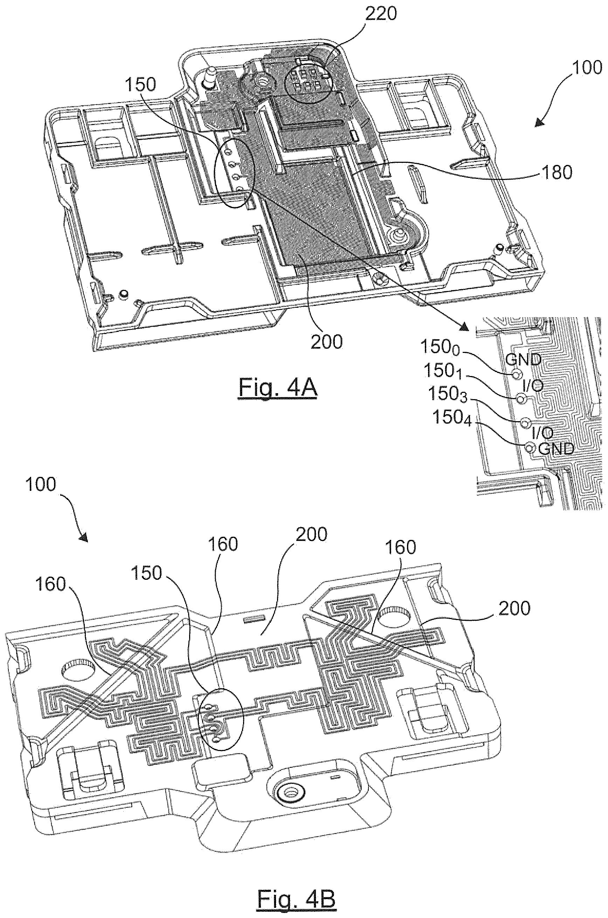

Le principe général de l'invention repose sur la mise en œuvre d'un treillis de protection électrique configuré recto-verso au niveau du corps de lecteur de carte à mémoire, comme illustré sur les **figures 4A** et **4B****.**

La vue de dessus illustrée sur la figure 4A montre la face interne d'un corps de lecteur de carte à mémoire 100 et la vue de dessous illustrée sur la figure 4B montre la face externe du corps de lecteur de carte à mémoire 100 selon un mode de réalisation particulier de l'invention. La face interne est la face sur laquelle vient se reporter le connecteur de carte à mémoire.

Le corps de lecteur de carte à mémoire 100 de forme globalement parallélépipédique rectangle comprend, sur sa face interne, un logement d'accueil 180 d'un connecteur de carte à mémoire. Le logement d'accueil 180 est d'une forme volumique prédéterminée : il permet de protéger le connecteur de carte à mémoire d'une intrusion externe, tout en ménageant l'espace nécessaire à l'insertion et à la lecture d'une carte à mémoire de type carte à puce. Le logement d'accueil 180 comprend une pluralité de pistes électriquement conductrices 200 formant un treillis de protection du connecteur de carte à mémoire. Comme illustré sur la figure, les pistes conductrices 200 sont agencées sur la face interne de telle sorte que le treillis de protection recouvre globalement la surface du logement d'accueil 180 destinée à recevoir le connecteur de carte à mémoire. Chaque piste conductrice se présente sous forme de boucle dont chaque extrémité se termine par un plot de contact (ou plot de connexion).

Le logement d'accueil 180 comprend en outre, sur sa surface interne, une zone de contact (ou zone de connexion) 220 dans laquelle sont regroupés les plots de contact du treillis de protection. La zone de contact 220 est destinée à être connectée au connecteur de carte à mémoire. Une fois le connecteur de carte à mémoire intégré au logement d'accueil 180, les plots de contact sont connectés au circuit électronique qui assure le fonctionnement du terminal de paiement électronique par l'intermédiaire d'un connecteur élastomère, par exemple de type Zebra (Marque déposée). Par exemple la zone de contact comprend six plots de contact 220 tel que représenté sur la figure 4A.

Selon l'invention, les pistes conductrices 200 s'étendent sans interruption sur la face externe du corps de lecteur de carte à mémoire 100 par l'intermédiaire de trous traversants électriquement conducteur (aussi appelés « vias » par la suite) de façon à étendre le treillis de protection de la face interne vers sur la face externe du corps de lecteur de carte à mémoire 100. Les vias traversantes sont illustrées par la zone en pointillés référencée 150. Chaque via est un trou traversant assurant la liaison électrique d'une piste conductrice de la face interne (« recto ») vers la face externe (« verso) ou de la face externe (« verso ») vers la face interne (« recto »). Ainsi, le treillis de protection selon l'invention étant biface (c'est-à-dire « recto-verso »), il présente une surface de protection augmentée par rapport aux solutions de l'art antérieur, réduisant les possibilités d'intrusions de tiers malintentionnés (usinage de la face externe notamment).

Les vias dans le présent exemple sont regroupées au sein d'une même zone du corps de lecteur de carte à mémoire 100. Bien entendu, il s'agit d'un exemple illustratif et d'autre configurations peuvent être envisager dans sortir d'une cadre de l'invention. Par exemple, les vias peuvent être distribuées de façon disparate sur les faces du corps de lecteur de carte à mémoire 100.

Les pistes conductrices 200 sont agencées sur la face externe de telle sorte que le treillis de protection recouvre sensiblement toute la surface externe du corps de lecteur de carte à mémoire. En effet, plus grande est la surface recouverte par les pistes conductrices 200, plus grand est le niveau de détection d'intrusions. Les pistes se présentent sous une forme géométrique prédéterminée.

Les pistes conductrices 200 sont imprimées sur les deux faces du corps de lecteur de carte à mémoire 100 au moyen d'une technique de gravure au laser, comme la technique LDS par exemple.

Dans l'exemple illustré ici, le logement d'accueil 180 comprend deux boucles conductrices : une boucle de premier type dédiée à la transmission du signal actif d'entrée-sortie (noté « I/O » sur la figure) et une deuxième boucle de deuxième type dédiée à la réalisation d'un potentiel de référence, aussi appelé masse (noté « GND » sur la figure). Comme expliqué plus haut, chaque extrémité de boucle se termine par un plot de connexion.

La première boucle conductrice I/O s'étend sans interruption depuis la face interne vers la face externe du corps de lecteur par l'intermédiaire d'une première via traversante 150₂ et depuis la face externe vers la face interne par l'intermédiaire d'une deuxième via traversante 150₃.

La deuxième boucle conductrice GND s'étend sans interruption depuis la face interne vers la face externe du corps de lecteur par l'intermédiaire d'une troisième via traversante 150₁ et depuis la face externe vers la face interne par l'intermédiaire d'une quatrième via traversante 150₄.

Afin d'augmenter les chances de détection d'intrusions frauduleuses, la surface du corps de lecteur de carte à mémoire est conçue de manière à présenter en face externe et/ou en face interne un ou plusieurs reliefs sur lesquelles s'étendent les pistes conductrices 200. Ces reliefs peuvent se présenter sous la forme de décrochés ou de marches 160, ce qui permet de former un treillis de protection à structure tridimensionnelle.

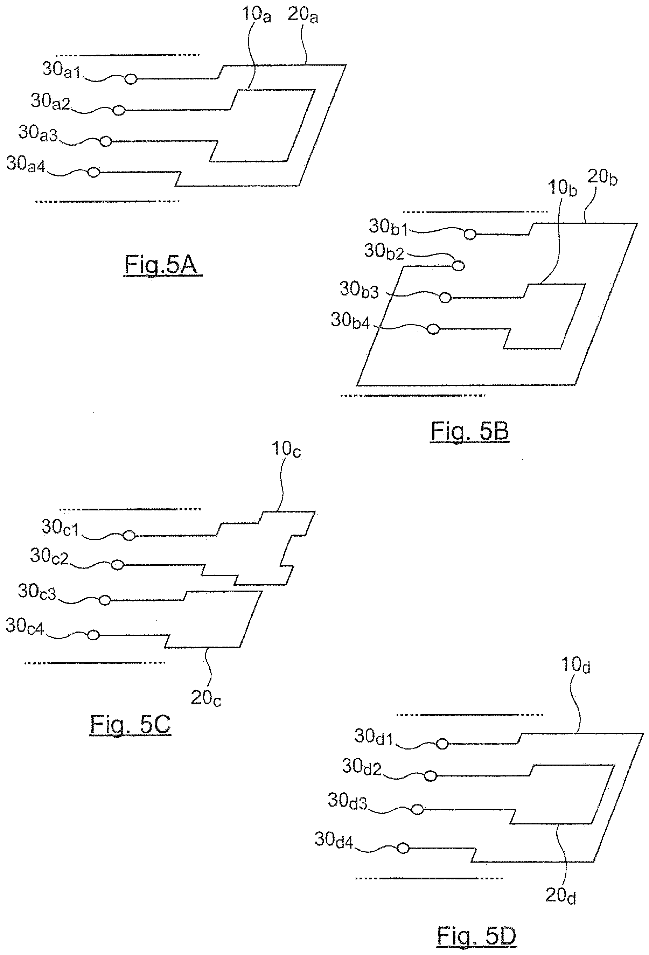

On se reporte désormais aux **figures 5A, 5B, 5C** et **5D** qui illustrent chacun un exemple de schéma électrique simplifié d'un treillis de protection selon l'invention, mettant en œuvre quatre vias traversantes. Il s'agit de treillis de protection situés sur la face externe du corps de lecteur de carte à mémoire.

S'agissant de la figure 5A :
- la piste conductrice 10a qui correspond au signal d'entrée-sortie I/O s'étend sans interruption de la face interne vers la face externe du corps de lecteur en passant par les vias traversantes 30a₂ et 30a₃ et
- la piste conductrice 20a s'étend sans interruption de la face interne vers la face externe du corps de lecteur en passant par les vias traversantes 30a₁ et 30a₄.

S'agissant de la figure 5B :
- la piste conductrice 10b qui correspond au signal d'entrée-sortie I/O s'étend sans interruption de la face interne vers la face externe du corps de lecteur en passant par les vias traversantes 30b₂ et 30b₃ et
- la piste conductrice 20b s'étend sans interruption de la face interne vers la face externe du corps de lecteur en passant par les vias traversantes 30b₁ et 30b₄.

S'agissant de la figure 5C :
- la piste conductrice 10c qui correspond au signal d'entrée-sortie I/O s'étend sans interruption de la face interne vers la face externe du corps de lecteur en passant par les vias traversantes 30c₂ et 30c₃ et
- la piste conductrice 20c s'étend sans interruption de la face interne vers la face externe du corps de lecteur en passant par les vias traversantes 30c₁ et 30c₄.

S'agissant de la figure 5D :
- la piste conductrice 10d qui correspond au signal d'entrée-sortie I/O s'étend sans interruption de la face interne vers la face externe du corps de lecteur en passant par les vias traversantes 30d₂ et 30d₃ et
- la piste conductrice 20d s'étend sans interruption de la face interne vers la face externe du corps de lecteur en passant par les vias traversantes 30d₁ et 30d₄.

Dans ces configurations, le corps de lecteur présente un ensemble de quatre vias traversantes et deux boucles conductrices.

On comprend que, grâce aux vias traversantes, la boucle conductrice I/O et la boucle conductrice GND traditionnellement agencées sur la face interne du corps de lecteur de carte à mémoire sont étendues au moins partiellement sur la face externe dudit corps.

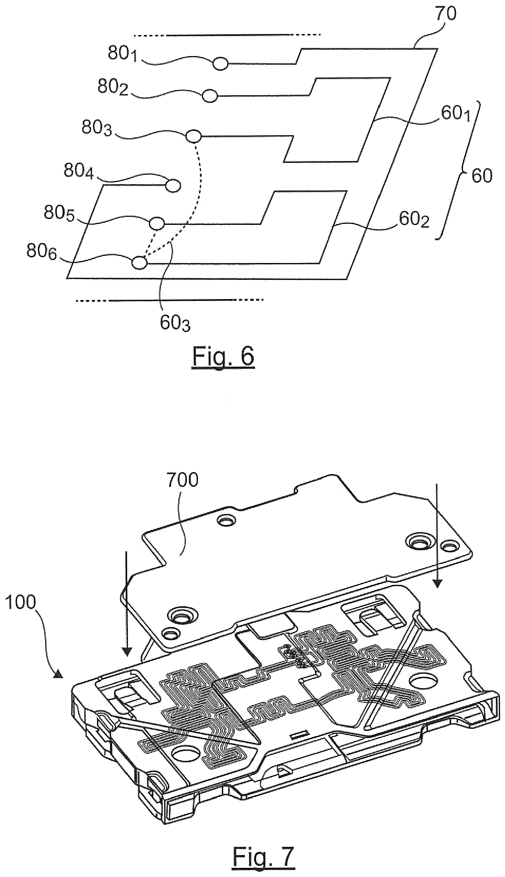

La figure 6 illustre un autre exemple de schéma électrique simplifié d'un treillis de protection selon l'invention mettant en en œuvre six vias traversantes.

La piste conductrice 70 représente la masse et passe à travers les vias traversantes 80₁ et 80₄. La piste conductrice 60 représente le signal actif d'entrée-sortie I/O. La piste conductrice 60 est constituée d'une première partie de piste 60₁ (« *Mesh In* ») située sur la face externe, d'une deuxième partie de piste 60₂ située sur la face interne et d'une troisième partie de piste 60₃ (*« Mesh Out »*) située sur la face externe. Les passages de la piste 60 de la face interne vers la face externe ou de la face externe vers la face interne sont assurés par les vias traversantes 80₂, 80₄, 80₅ 80₆. La deuxième partie de piste 60₂ forme un pont entre sur la face interne permettant de relier électriquement les première et troisième parties de piste situées sur la face externe du corps de lecteur de carte à mémoire. Cette configuration particulière permet de ralentir davantage les attaques de tiers malintentionnés car court-circuiter une partie de piste (ou de la boucle) ne permet pas de désactiver la totalité de la piste (ou de la boucle).

Cette solution particulière montre par ailleurs qu'en augmentant le nombre de vias traversantes tout en conservant le nombre de signaux ou de boucles (1 masse et 1 signal I/O), le nombre de configurations électriques envisageable augmente de façon combinatoire.

Il s'agit bien entendu d'exemples donnés à titre purement illustratifs. D'autres configurations électriques, basé sur le même principe, peuvent être envisagées sans sortir du cadre de l'invention.

En outre, la face externe du corps de lecteur de carte à mémoire 100 est recouverte d'une résine de protection thermodurcissable opaque (par exemple une résine époxy bi-composant de type LOCTITE 9497, LOCTITE 9466 ou LOCTITE 9464). Ainsi, l'accès par la face externe aux signaux sensibles sans casser les pistes conductrices est rendu extrêmement difficile. En effet, une résine thermodurcissable est à la fois dure et fragile. L'opacité de la résine assure la non visibilité des pistes conductrices à travers celle-ci. Une résine de protection thermoplastique peut également être envisagée à titre de variante de mise en œuvre, mais elle présente néanmoins le défaut de pouvoir être aisément dégradée par chauffage. Une résine de type acrylate assurant la même fonction peut également être utilisée dans le cadre de l'invention.

Comme illustré sur la **figure 7****,** le corps de lecteur de carte à mémoire 100 peut comprendre un capot de protection 700 monté sur sa face externe. Le capot peut être scellé sur la face externe au moyen d'une colle thermodurcissable ou cyanoacrylate (par exemple de type CYANO 406). Le capot peut être réalisé à partir d'un matériau thermodurcissable ou thermoplastique. On peut également envisager de réaliser le capot en métal. Dans ce cas, il convient de prévoir une épaisseur de colle ou de résine suffisamment importante pour éviter toute interférence entre le capot et les pistes conductrices.

L'homme choisira la matière du corps de lecteur (au moins du côté de sa face externe) de sorte qu'elle soit compatible en terme d'adhérence avec la résine ou la colle utilisée pour protéger le corps de lecteur. De même, la matière du capot sera choisie de sorte qu'elle soit compatible avec la résine ou la colle utilisée.

Enfin, on décrit ci-après les étapes principales du procédé de fabrication d'un treillis de protection pour corps de lecteur de carte à mémoire selon un mode de réalisation particulier de l'invention. Tout d'abord, on définit une forme géométrique des pistes électriquement conductrices s'étendant sur les faces interne et externe du corps de lecteur de carte à mémoire. On définit également l'emplacement des vias traversant lesdites faces interne et externe. Puis on réalise lesdites pistes conductrices au moyen d'une technique de gravure au laser (LSD par exemple) sur les faces interne et externe du corps de lecteur de carte à mémoire, ainsi que les vias traversantes au moyen d'un perçage mécanique ou d'un perçage laser. Le treillis de protection ainsi formé comprend des pistes conductrices recto-verso. La surface de protection se trouve augmentée par rapport aux solutions de l'art antérieur, réduisant les possibilités d'intrusions externes. A noter que la forme géométrique des pistes et l'emplacement des vias peuvent être choisis respectivement parmi une pluralité de formes géométriques prédéterminées et une pluralité d'emplacements prédéterminés. Cela permet de rendre encore plus difficile les intrusions externes.

## Revendications

1. Corps de lecteur de carte à mémoire (100) comprenant, sur une face interne, un logement d'accueil (180) d'un connecteur de carte à mémoire, le logement d'accueil comprenant au moins une piste électriquement conductrice (200) formant un treillis de protection du connecteur de carte à mémoire,
**caractérisé en ce que** ladite au moins une piste électriquement conductrice s'étend en outre sur une face externe du corps de lecteur de carte à mémoire au moyen d'au moins une via traversant lesdites faces interne et externe.

2. Corps de lecteur de carte à mémoire selon la revendication 1, comprenant au moins une piste électriquement conductrice de type signal actif dont chaque extrémité est terminée par un plot de connexion situé sur la face interne, ladite piste électriquement conductrice de type signal actif s'étendant depuis la face interne vers la face externe via un premier trou traversant électriquement conducteur et depuis la face externe vers la face interne via un deuxième trou traversant électriquement conducteur.

3. Corps de lecteur de carte à mémoire selon la revendication 1, comprenant en outre au moins une piste électriquement conductrice de type masse dont chaque extrémité est terminée par un plot de connexion situé sur la face interne, ladite au moins une piste électriquement conductrice de type masse s'étendant depuis la face interne vers la face externe via un troisième trou traversant électriquement conducteur et depuis la face externe vers la face interne via un quatrième trou traversant électriquement conducteur.

4. Corps de lecteur de carte à mémoire selon la revendication 1, dans lequel la face externe est recouverte d'une résine thermodurcissable.

5. Corps de lecteur de carte à mémoire selon la revendication 1, dans lequel la face externe est recouverte d'une résine thermoplastique.

6. Corps de lecteur de carte à mémoire selon la revendication 1, comprenant un capot de protection monté sur la face externe.

7. Corps de lecteur de carte à mémoire selon la revendication 6, dans lequel ledit capot de protection est scellé à la face externe au moyen d'une colle thermodurcissable ou colle cyanoacrylate.

8. Corps de lecteur de carte à mémoire selon la revendication 1, dans lequel ladite face interne et/ou ladite face externe présente au moins une zone en relief sur laquelle ladite au moins une piste électriquement conductrice s'étend.

9. Corps de lecteur de carte à mémoire selon la revendication 1, dans lequel ladite au moins une piste électriquement conductrice se présente sous la forme d'une boucle ayant une forme géométrique prédéterminée.

10. Lecteur de carte à mémoire **caractérisé en ce qu'**il comprend un corps de lecteur selon l'une quelconque des revendications 1 à 9.

11. Terminal **caractérisé en ce qu'**il comprend un lecteur de carte à mémoire selon la revendication 10.

12. Procédé de fabrication d'un treillis de protection d'un connecteur de carte à mémoire pour un corps de lecteur de carte à mémoire, **caractérisé en ce qu'**il comprend :
- définition d'une forme géométrique d'au moins une piste électriquement conductrice s'étendant sur les faces interne et externe dudit corps de lecteur de carte à mémoire au moyen d'au moins une via traversant lesdites faces interne et externe ;
- définition d'un emplacement de ladite au moins une via traversante ;
- obtention de ladite au moins une piste conductrice et de ladite au moins une via traversante sur le corps de lecteur de carte à mémoire.

## Patentansprüche

1. Körper eines Speicherkartenlesers (100), umfassend auf einer Innenfläche ein Aufnahmegehäuse (180) eines Speicherkarteverbinders, wobei das Aufnahmegehäuse mindestens eine elektrische Leiterbahn (200) aufweist, die ein Schutznetz des Speicherkartenverbinders bildet,
**dadurch gekennzeichnet, dass** sich die mindestens eine elektrische Leiterbahn ferner auf einer Außenfläche des Körpers des Speicherkartenlesers mittels mindestens eines Kontaktlochs erstreckt, das die Innen- und Außenfläche durchquert.

2. Körper eines Speicherkartenlesers nach Anspruch 1, umfassend mindestens eine elektrische Leiterbahn vom Typ des Aktivsignals, wovon jedes Ende mit einer Anschlussfläche endet, die sich auf der Innenseite befindet, wobei sich die elektrische Leiterbahn vom Typ des Aktivsignals von der Innenfläche zur Außenfläche über ein erstes elektrisch leitendes Durchgangsloch und von der Außenfläche zur Innenfläche über ein zweites elektrisch leitendes Durchgangsloch erstreckt.

3. Körper eines Speicherkartenlesers nach Anspruch 1, umfassend ferner mindestens eine elektrische Leiterbahn vom Typ der Masse, wovon jedes Ende mit einer Anschlussfläche endet, die sich auf der Innenseite befindet, wobei sich die mindestens eine elektrische Leiterbahn vom Typ der Masse von der Innenfläche zur Außenfläche über ein drittes elektrisch leitendes Durchgangsloch und von der Außenfläche zur Innenfläche über ein viertes elektrisch leitendes Durchgangsloch erstreckt.

4. Körper eines Speicherkartenlesers nach Anspruch 1, wobei die Außenfläche mit einem wärmehärtenden Harz bedeckt ist.

5. Körper eines Speicherkartenlesers nach Anspruch 1, wobei die Außenfläche mit einem thermoplastischen Harz bedeckt ist.

6. Körper eines Speicherkartenlesers nach Anspruch 1, umfassend eine Schutzhaube, die auf der Außenfläche befestigt ist.

7. Körper eines Speicherkartenlesers nach Anspruch 6, wobei die Schutzhaube auf der Außenfläche mit einem wärmehärtbaren Klebstoff oder einem Cyanacrylat-Klebstoff versiegelt ist.

8. Körper eines Speicherkartenlesers nach Anspruch 1, wobei die Innenfläche und/oder die Außenfläche mindestens einen erhabenen Bereich aufweist, auf dem sich mindestens eine elektrische Leiterbahn erstreckt.

9. Körper eines Speicherkartenlesers nach Anspruch 1, wobei die mindestens eine elektrische Leiterbahn in Form einer Schleife vorliegt, die eine vorbestimmte geometrische Form aufweist.

10. Speicherkartenleser, **dadurch gekennzeichnet, dass** er einen Körper eines Lesers nach einem der Ansprüche 1 bis 9 aufweist.

11. Endgerät, **dadurch gekennzeichnet, dass** es einen Speicherkartenleser nach Anspruch 10 aufweist.

12. Verfahren zur Herstellung eines Schutznetzes eines Speicherkartenverbinders für einen Körper eines Speicherkartenlesers, **dadurch gekennzeichnet, dass** es aufweist:
- Definieren von einer geometrischen Form von mindestens einer elektrischen Leiterbahn, die sich auf der Innen- und Außenfläche des Körpers des Speicherkartenlesers mittels mindestens eines Kontaktlochs erstreckt, das die Innen- und Außenfläche durchquert,
- Definieren von einer Position des mindestens einen Durchgangskontaktlochs,
- Erhalten der mindestens einen elektrischen Leiterbahn und des mindestens einen Durchgangskontaktlochs auf dem Körper des Speicherkartenlesers.

## Claims

1. Memory card reader body (100) comprising, on an inner face, a receiving recess (180) for receiving a memory card connector, the receiving recess comprising at least one electrically conductive track (200) forming a mesh for protecting the memory card connector,
**characterised in that** said at least one electrically conductive track further extends on an outer face of the memory card reader body by means of at least one via passing through said inner and outer faces.

2. Memory card reader body according to claim 1, comprising at least one electrically conductive track of active signal type, each end whereof ends by a bonding pad located on the inner face, said electrically conductive track of the active signal type extending from the inner face to the outer face via a first electrically conductive through-hole and from the outer face to the inner face via a second electrically conductive through-hole.

3. Memory card reader body according to claim 1, further comprising at least one electrically conductive track of ground type, each end whereof ends by a bonding pad located on the inner face, said at least one electrically conductive track of the ground type extending from the inner face to the outer face via a third electrically conductive through-hole and from the outer face to the inner face via a fourth electrically conductive through-hole.

4. Memory card reader body according to claim 1, wherein the outer face is coated in a thermosetting resin.

5. Memory card reader body according to claim 1, wherein the outer face is coated in a thermoplastic resin.

6. Memory card reader body according to claim 1, comprising a protective housing mounted on the outer face.

7. Memory card reader body according to claim 6, wherein said protective housing is sealed to the outer face by means of a thermosetting adhesive or cyanoacrylate adhesive.

8. Memory card reader body according to claim 1, wherein said inner face and/or said outer face has at least one raised area on which said at least one electrically conductive track extends.

9. Memory card reader body according to claim 1, wherein said at least one electrically conductive track is present in the form of a loop having a predetermined geometric shape.

10. Memory card reader **characterised in that** it comprises a reader body according to any one of claims 1 to 9.

11. Terminal **characterised in that** it comprises a memory card reader according to claim 10.

12. Method for manufacturing a mesh for protecting a memory card connector for a memory card reader body, **characterised in that** it comprises:
- defining a geometric shape of at least one electrically conductive track extending on the inner and outer faces of said memory card reader body by means of at least one via passing through said inner and outer faces;
- defining a location of said at least one through-via;
- obtaining said at least one conductive track and said at least one through-via on the memory card reader body.
